# FASCICULE DE BREVET EUROPEEN

(11) **EP 3 209 894 B1**
(45) Date de publication et mention de la délivrance du brevet: **11.03.2020**
(21) Numéro de dépôt: 15788161.6
(22) Date de dépôt: 09.10.2015
(51) Int. Cl.: F16B 21/06, F16B 21/08, F16B 5/06, B60R 13/02

(54) **AGENCEMENT D'UNE STRUCTURE POUR LE MONTAGE D'UNE PIECE DANS UNE OUVERTURE AU CONTOUR IRREGULIER**
ANORDNUNG EINER STRUKTUR ZUR MONTAGE EINES TEILS IN EINER ÖFFNUNG MIT EINER UNREGELMÄSSIGEN KONTUR
ARRANGEMENT OF A STRUCTURE FOR MOUNTING A PART IN AN OPENING WITH AN IRREGULAR CONTOUR

(30) Priorité: 24.10.2014 FR 1460264
(43) Date de publication de la demande: 30.08.2017
(73) Titulaire: PSA Automobiles SA, 78300 Poissy (FR)
(72) Inventeur: HUCHE, Thierry, 78113 Conde sur Vesgre (FR)
(86) Numéro de dépôt international: PCT/FR2015/052720
(87) Numéro de publication internationale: WO 2016/062939

(56) Documents cités:
- EP-A1- 0 814 273
- EP-A1- 0 855 523
- EP-A1- 2 749 778
- JP-A- 2009 097 521
- JP-A- 2012 167 694
- JP-A- 2013 083 294

## Description

L'invention se situe dans le domaine de l'aménagement intérieur de véhicules et plus spécifiquement concerne l'agencement d'une structure pour clipper une pièce dans une ouverture de contour irrégulier.

Dans certains cas, il est nécessaire de réaliser des ouvertures de dimensions relativement précises pour monter une pièce selon les préconisations requises. Par exemple, une ouverture doit être rectangulaire avec des bords rectilignes pour fournir un montage correct car les bords sont utilisés pour effectuer le centrage de la pièce à monter. Le document FR2796999 décrit une structure de montage de pièces, comprenant un élément de montage prévu sur une pièce, l'élément de montage comportant une partie évidée et un élément intermédiaire destiné à être verrouillé dans un trou de montage rectangulaire d'une base, l'élément intermédiaire comportant un élément de verrouillage, ledit élément de verrouillage comportant une griffe d'accrochage destinée à être accrochée avec la partie évidée de l'élément de montage.

Dans certaines conditions, ces ouvertures doivent être réalisées par usinage et notamment par fraisage. Cette opération fournit une ouverture au contour imprécis et par conséquent, le centrage et la fixation d'une pièce ne peut être qu'approximatif, le montage ne peut pas être précis, ni fiable et présente des risques évident de mauvaise tenue de l'assemblage concerne.

Une structure de montage de pièces est connue de JP 2013-83294A.

L'invention a pour objectif de résoudre les problèmes rencontrés dans l'art antérieur en proposant une structure de montage de pièces permettant d'obtenir un centrage et un montage précis de ladite pièce garantissant un assemblage robuste.

L'invention est définie par les revendications. A cet effet l'invention propose une structure de montage de pièces comprenant un élément de retenue comportant une tête et une tige dans laquelle est ménagée un évidement pour engager un élément élastique comprenant une griffe d'accrochage propre à être accrochée dans la partie évidée de l'élément de retenue, l'élément de retenue étant destiné à être verrouillé dans l'ouverture d'une pièce de base pour l'assembler, l'ouverture de la pièce de base comportant des éléments d'accrochages à l'intérieur de la bordure de l'ouverture, les éléments d'accrochages sont décalés du bord de l'ouverture.

Avantageusement, les éléments d'accrochages sont des nervures.

Selon une variante, les éléments d'accrochages sont disposés de deux côtés de l'ouverture sur toute sa longueur.

Selon une variante, les éléments d'accrochages ont une section carrée.

Avantageusement, les éléments élastiques possèdent une portée d'appui qui vient en contact sur une arrête à angle droit des éléments d'accrochages.

Selon une autre variante, les éléments élastiques viennent en appui sur une surface oblique des éléments d'accrochages.

De façon avantageuse, les éléments élastiques ont une largeur identique à la longueur des éléments d'accrochage.

Selon une variante, la tige de l'élément de retenue est engagée dans une pièce de contre appui.

De manière optionnelle, l'élément de contre appui traversé par la tige est disposé dans une cuvette de la pièce de base et intercalé entre le fond de la cuvette et la tête de l'élément de retenue.

L'invention sera bien comprise et d'autres aspects et avantages apparaîtront clairement à la lecture de la description qui suit, donnée à titre d'exemple par rapport aux figures annexées sur lesquelles :
- La figure 1 présente une vue schématique de profil d'un élément de retenue monté dans une ouverture d'une pièce d'aspect, selon l'art antérieur ;
- La figure la présente une vue de dessous de l'ouverture au contour régulier de la pièce d'aspect, selon l'art antérieur.
- La figure 1b présente une vue de dessus de l'ouverture d'un contour irrégulier de la pièce d'aspect ;
- La figure 2 présente une vue schématique de profil d'une structure de montage de pièces comprenant un élément de retenue monté dans une ouverture au contour irrégulier d'une pièce d'aspect, selon l'invention ;
- La figure 3 présente une vue schématique de profil d'une structure de montage de pièces comprenant un élément de retenue équipé avant son engagement dans une ouverture au contour irrégulier d'une pièce d'aspect, selon un second mode de réalisation de l'invention ;
- La figure 4 présente une vue schématique de profil d'une structure de montage de pièces comprenant un élément de retenue engagé dans une ouverture au contour irrégulier d'une pièce d'aspect, selon un second mode de réalisation de l'invention ;
- La figure 5 présente une vue schématique de profil d'un élément de retenue engagé dans une ouverture au contour irrégulier d'une pièce d'aspect, selon une variante du second mode de réalisation de l'invention.

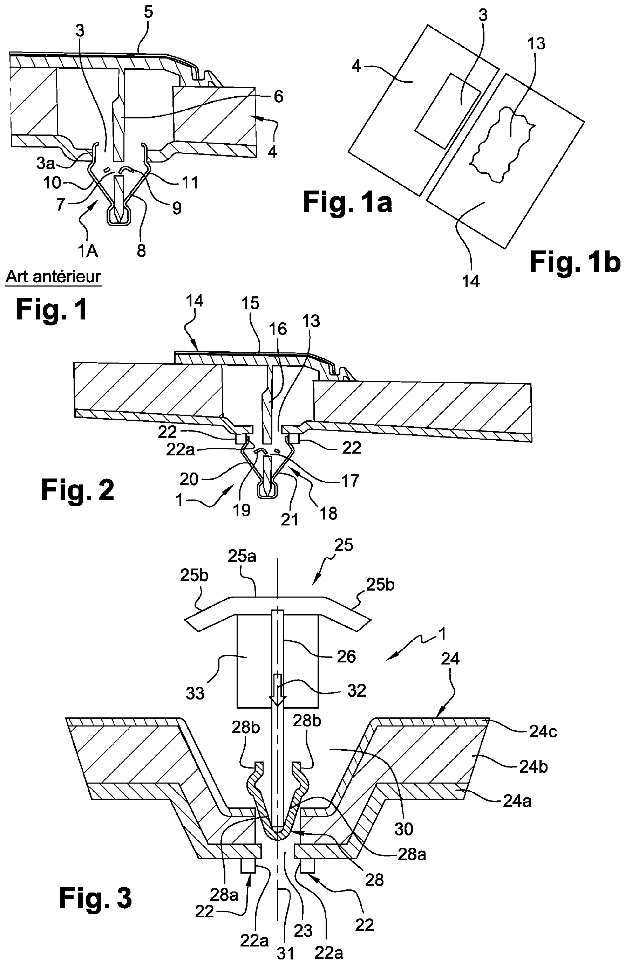

La figure 1 présente une vue schématique de profil d'un élément de retenue 1A monté dans une ouverture 3 d'une pièce d'aspect 4, selon l'art antérieur, en vue de fixer l'élément de retenue 1A. L'élément de retenue 1A est constitué d'une tête 5 prolongée par une tige 6. La tige 6 comporte à proximité de son extrémité un évidement 7 permettant la retenue d'une agrafe 8 engagée sur l'extrémité de la tige 6, à l'aide de griffes 9 s'enclenchant dans l'évidement 7. L'agrafe 8 comporte deux branches 10, 11 dont les extrémités sont conformées pour s'appuyer sur la bordure 3a de l'ouverture 3, au contour régulier. Ainsi, l'élément de retenue 1A est centré correctement dans l'ouverture 3 et fixé fermement. La tête 5 de l'élément de retenue 1A peut être un emblème ou comporter un décor spécifique pour embellir ou pour améliorer la qualité perçue de la pièce d'aspect 4 qui pourrait être une planche de bord ou une pièce à valoriser.

La figure la présente une vue de dessus de l'ouverture 3 au contour régulier de la pièce d'aspect 4, selon l'art antérieur, quand l'ouverture peut être réalisée par moulage.

La figure 1b présente une vue de dessus de l'ouverture 13 au contour irrégulier de la pièce d'aspect 14. Dans certains cas, il n'est pas possible d'obtenir les ouvertures 13 directement par moulage, par conséquent l'ouverture 13 doit être réalisée par usinage et plus particulièrement par fraisage, ce qui génère à l'ouverture 13 un contour irrégulier. On comprend bien que le centrage de l'agrafe 8, tel que définie à la figure 1 pourrait créer des désaxages inacceptables au niveau de la qualité perçue. Par conséquent, une solution a été développée pour remédier à ce problème comme cela sera décrit à l'appui de la figure 2.

La figure 2 présente une vue schématique de profil d'une structure de montage de pièces comprenant un élément de retenue 1 monté dans une ouverture 13 au contour irrégulier d'une pièce d'aspect 14, selon l'invention. Afin de pallier aux inconvénients de l'irrégularité du contour de l'ouverture 13 des nervures 22 venues de matière avec la base de la pièce d'aspect 14 sont disposées sous la bordure de l'ouverture 13 et en retrait par rapport au dit bord. Les nervures 22 sont de section carrée et se prolongent sur toute la longueur de l'ouverture 13 correspondant à la largeur de l'agrafe 18 engagée sur l'extrémité de la tige 16 opposée à la tête 15 représentant un emblème ou un décor, à l'aide de griffes 19 s'enclenchant dans l'évidement 17. L'élément de retenue 1 est donc identique à celui décrit à l'appui de la figure 1. Seules, les deux branches 20, 21 sont différentes de manière à s'adapter au plus juste au profil des nervures 22. Lorsque l'élément de retenue 1 est équipé, l'agrafe 18 est montée sur la tige 16, et il est introduit dans l'ouverture 13. Les branches 20, 21 élastiques de l'agrafe 18 se rétractent dans le passage de l'ouverture 13 puis s'expansent de manière que les extrémités des branches 20, 21 de la forme en V puisse venir en appui à l'intérieur de la bordure (22a) des nervures 22 pour centrer l'élément de retenue 1, tandis que la forme en V de l'agrafe 18 vient en appui sur le coin des nervures 22, c'est-à-dire sur l'arête à angle droit de la bordure 22a pour bloquer la pièce 14. De cette façon, la structure de montage de pièces comprenant un élément de retenue 1 est correctement centré, orientée et bloquée dans l'ouverture 13 au contour irrégulier.

La figure 3 présente une vue schématique de profil d'une structure de montage de pièces comprenant un élément de retenue 1 équipé avant son engagement dans une ouverture 23 au contour irrégulier d'une pièce d'aspect 24, selon un second mode de réalisation de l'invention. La pièce d'aspect 24 est constituée d'une pièce de base rigide 24a, sur laquelle est fixée une couche de mousse 24b, recouverte d'une peau attrayante 24c. L'ouverture 23 comportant une paire de nervures à l'intérieur de la pièce d'aspect 24, est disposée dans une cuvette 30 symétrique à l'axe 31 de l'ouverture 23. La tête 25 comportant une partie centrale plane 25a prolongée par deux pans obliques 25b, de l'élément de retenue 1 est conformée de manière à venir affleurer sur le bord de la cuvette 30. De plus, un élément de contre appui 33 monté sur la tige 26 par l'intermédiaire d'une fente appropriée. L'élément de contre appui 33 a pour but d'exercer une reprise d'effort entre le fond de la cuvette 30 et la tête 25 de l'élément de retenue 1. L'extrémité de la tige 26 est pourvue de l'agrafe 28. L'élément de retenue 1 est engagée en exerçant un effort suivant la flèche 32, pour l'introduire dans l'ouverture 23 et l'insérer entre les nervures 22, de façon que l'extrémité externe plate 28b des branches 28a de l'agrafe 28 viennent en appui à l'intérieur de la bordure 22a des dites nervures 22 placées de part et d'autres de l'ouverture 23.

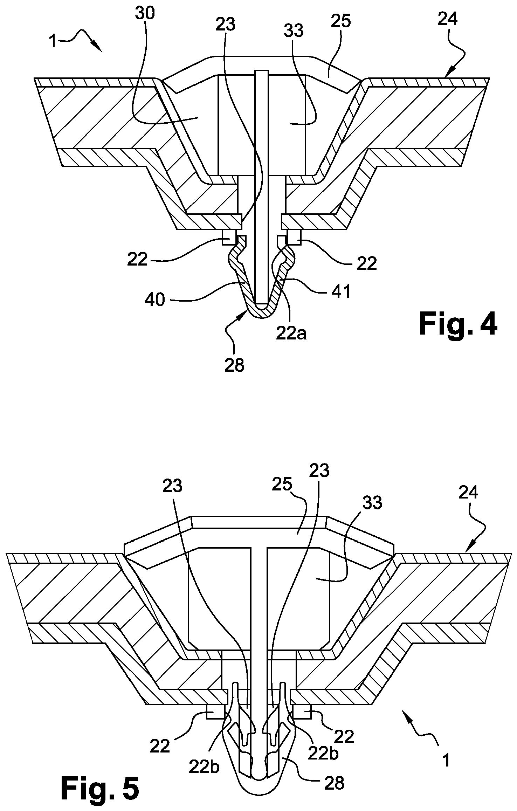

La figure 4 présente une vue schématique de profil d'une structure de montage de pièces comprenant un élément de retenue 1 engagé dans une ouverture 23 au contour irrégulier d'une pièce d'aspect 24, selon un second mode de réalisation de l'invention. La tête 25 de l'élément de retenue 1 vient affleurer sur la surface de la pièce d'aspect 24, tandis que L'élément de contre appui 33 est comprimé entre la tête 25 et le fond de la cuvette 30. Les branches 40, 41 élastiques de l'agrafe 28 se sont expansées de manière que leurs extrémités viennent en appui à l'intérieur de la bordure 22a et leur forme en V viennent en appui sur le coin des nervures 22, pour bloquer l'élément de retenue 1, correctement centré, orienté et bloqué dans l'ouverture 23 au contour irrégulier.

La figure 5 présente une vue schématique de profil d'une structure de montage de pièces comprenant un élément de retenue 1 engagé dans une ouverture 23 au contour irrégulier d'une pièce d'aspect 24, selon une variante du second mode de réalisation de l'invention. Dans cette variante, les angles des nervures 22 en regard de l'ouverture 23 sont chanfreinés. L'agrafe 28 de l'élément de retenue 1 est identique et la forme en V vient épouser et s'appuyer sur la surface oblique 22b chanfreinée des nervures 22 de la pièce d'aspect 24 permettant le centrage correct et le blocage de l'élément de retenue 1.

## Revendications

1. Structure de montage de pièces comprenant un élément de retenue (1), un élément élastique (18) et une pièce d'aspect (14), l'élément de retenue (1) comportant une tête (15) et une tige (16, 26) dans laquelle est ménagée un évidement (17) pour engager l' élément élastique (18) comprenant une griffe (19) d'accrochage propre à être accrochée dans la partie évidée (17) de l'élément de retenue (1), l'élément de retenue (1) étant destiné à être verrouillé dans l'ouverture (13) de la pièce d'aspect (14) pour la fixer, l'ouverture (13) de la pièce d'aspect (14) comportant des éléments d'accrochages (22) à l'intérieur de la bordure (22a) de l'ouverture (13, 23), **caractérisée en ce que** les éléments d'accrochages (22) sont décalés du bord de l'ouverture (13).

2. Structure de montage de pièces selon la revendication 1, **caractérisée en ce que** les éléments d'accrochages (22) sont des nervures.

3. Structure de montage de pièces selon l'une quelconque des revendications 1 ou 2, **caractérisée en ce que** les éléments d'accrochages (22) sont disposés de deux côtés de l'ouverture (13) sur toute sa longueur.

4. Structure de montage de pièces selon l'une quelconque des revendications précédentes, **caractérisée en ce que** les éléments d'accrochages (22) ont une section carrée.

5. Structure de montage de pièces selon la revendication 1, **caractérisée en ce que** l'élément élastique (18) possède une portée d'appui qui vient en contact sur une arrête à angle droit (22a) des éléments d'accrochages (22).

6. Structure de montage de pièces selon la revendication 1, **caractérisée en ce que** l'élément élastique (18) vient en appui sur une surface oblique (22b) des éléments d'accrochages (22).

7. Structure de montage de pièces selon l'une quelconque des revendications 1, 5, 6, **caractérisée en ce que** l'élément élastique (18) a une largeur identique à la longueur des éléments d'accrochage (22) .

8. Structure de montage de pièces selon la revendication 1, **caractérisée en ce que** la tige (16) de l'élément de retenue (1) est engagée dans une pièce de contre appui (33) .

9. Structure de montage de pièces selon la revendication 8, **caractérisée en ce que** l'élément de contre appui (33) traversé par la tige (16) est disposé dans une cuvette (30) de la pièce d'aspect (14, 24) et intercalé entre le fond de la cuvette (30) et la tête (15) de l'élément de retenue (1).

## Patentansprüche

1. Struktur zur Montage von Teilen, die ein Halteelement (1), ein elastisches Element (18) und ein Erscheinungsbildteil (14) umfassen, wobei das Halteelement (1) einen Kopf (15) und einen Schaft (16, 26) umfasst, in dem eine Aussparung (17) angelegt ist, um das elastische Element (18) einzufügen, das eine Klaue (19) zum Anhängen umfasst, die geeignet ist, in dem ausgesparten Teil (17) des Halteelements (1) angehängt zu werden, wobei das Halteelement (1) dazu bestimmt ist, in der Öffnung (13) des Erscheinungsbildteils (14) verriegelt zu werden, um es zu befestigen, wobei die Öffnung (13) des Erscheinungsbildteils (14) Anhängelemente (22) in dem Inneren des Rands (22a) der Öffnung (13, 23) umfasst, **dadurch gekennzeichnet, dass** die Anhängelemente (22) von dem Rand der Öffnung (13) versetzt sind.

2. Struktur zur Montage von Teilen nach Anspruch 1, **dadurch gekennzeichnet, dass** die Anhängelemente (22) Rippen sind.

3. Struktur zur Montage von Teilen nach einem der Ansprüche 1 oder 2, **dadurch gekennzeichnet, dass** die Anhängelemente (22) auf zwei Seiten der Öffnung (13) auf ihrer gesamten Länge angeordnet sind.

4. Struktur zur Montage von Teilen nach einem der vorstehenden Ansprüche, **dadurch gekennzeichnet, dass** die Anhängelemente (22) einen Quadratquerschnitt aufweisen.

5. Struktur zur Montage von Teilen nach Anspruch 1, **dadurch gekennzeichnet, dass** das elastische Element (18) eine Auflagefläche besitzt, die auf einer Kante mit rechtem Winkel (22a) der Anhängelemente (22) in Kontakt kommt.

6. Struktur zur Montage von Teilen nach Anspruch 1, **dadurch gekennzeichnet, dass** das elastische Element (18) auf einer schrägen Oberfläche (22b) der Anhängelemente (22) zum Aufliegen kommt.

7. Struktur zur Montage von Teilen nach einem der Ansprüche 1, 5, 6, **dadurch gekennzeichnet, dass** das elastische Element (18) eine Breite aufweist, die mit der Länge der Anhängelemente (22) identisch ist.

8. Struktur zur Montage von Teilen nach Anspruch 1, **dadurch gekennzeichnet, dass** der Schaft (16) des Halteelements (1) in ein Teil der Gegenauflage (33) eingreift.

9. Struktur zur Montage von Teilen nach Anspruch 8, **dadurch gekennzeichnet, dass** das Gegenauflageelement (33), das von dem Schaft (16) durchquert ist, in einer Wanne (30) des Erscheinungsbildteils (14, 24) angeordnet und zwischen dem Grund der Wanne (30) und dem Kopf (15) des Halteelements (1) eingefügt ist.

## Claims

1. A structure for mounting parts including a retention element (1), an elastic element (18) and a visible part (14), the retention element (1) comprising a head (15) and a shank (16, 26) in which there is arranged a recess (17) for engaging the elastic element (18) including a hooking claw (19) suitable to be hooked in the recessed part (17) of the retention element (1), the retention element (1) being intended to be locked in the opening (13) of the visible part (14) in order to fix it, the opening (13) of the visible part (14) comprising hook elements (22) in the interior of the edge (22a) of the opening (13, 23), **characterized in that** the hook elements (22) are offset from the edge of the opening (13).

2. The structure for mounting parts according to Claim 1, **characterized in that** the hook elements (22) are ribs.

3. The structure for mounting parts according to any one of Claims 1 or 2, **characterized in that** the hook elements (22) are disposed on two sides of the opening (13) over the whole of its length.

4. The structure for mounting parts according to any one of the preceding claims, **characterized in that** the hook elements (22) have a square cross-section.

5. The structure for mounting parts according to Claim 1, **characterized in that** the elastic element (18) has a support bearing which comes in contact on a right-angled edge (22a) of the hook elements (22).

6. The structure for mounting parts according to Claim 1, **characterized in that** the elastic element (18) comes to rest on an oblique surface (22b) of the hook elements (22).

7. The structure for mounting parts according to any one of Claims 1, 5, 6, **characterized in that** the elastic element (18) has a width identical to the length of the hook elements (22).

8. The structure for mounting parts according to Claim 1, **characterized in that** the shank (16) of the retention element (1) is engaged in a counter support part (33).

9. The structure for mounting parts according to Claim 8, **characterized in that** the counter support element (33) passed through by the shank (16) is disposed in a cup (30) of the visible part (14, 24) and intercalated between the bottom of the cup (30) and the head (15) of the retention element (1).
